# EUROPÄISCHE PATENTSCHRIFT

(11) **EP 2 327 491 B1**
(45) Veröffentlichungstag und Bekanntmachung des Hinweises auf die Patenterteilung: **26.09.2012**
(21) Anmeldenummer: 10192370.4
(22) Anmeldetag: 24.11.2010
(51) Int. Cl.: B21K 5/04, B23B 51/02, B23P 15/32, B23B 51/00

(54) **Verfahren zur Herstellung eines Bohrers und derart hergestellter Bohrer**
Method for manufacturing a drill and drill manufactured thereby
Procédé pour la fabrication d'un foreur et foureur fabriqué ainsi

(30) Priorität: 26.11.2009 DE 102009055748
(43) Veröffentlichungstag der Anmeldung: 01.06.2011
(73) Patentinhaber: Südsta AG, 6304 Zug (CH)
(72) Erfinder:
(74) Vertreter: Eisenführ, Speiser & Partner

(56) Entgegenhaltungen:
- WO-A2-2010/142458
- DE-A1- 19 915 303
- US-A- 2 541 849
- US-A- 3 504 575
- US-B1- 6 287 210

## Beschreibung

Die Erfindung betrifft ein Verfahren zur Herstellung eines Bohrers, insbesondere eines Bohrers für Akkuschrauber, Bohrhämmer, Elektroschrauber, Schlagbohrmaschinen, Drehbohrmaschinen und Kombinationen derselben, und einen mit einem solchen Verfahren hergestellten Bohrer.

Verfahren und Bohrer der eingangs genannten Art sind aus dem Stand der Technik bekannt. Insbesondere sind Verfahren bekannt, in Bohrer Nuten zur Bohrmehlabfuhr einzubringen.

Aufgabe der vorliegenden Erfindung ist es, Verfahren und Bohrer der eingangs genannten Art zu verbessern.

Diese Aufgabe wird durch die Gegenstände der unabhängigen Ansprüche gelöst.

Wenn im Rahmen der vorliegenden Erfindung vom "Massivumformen" gesprochen wird, so umfasst dies immer auch Kalt- und/oder Warmumformung. Wenn im Rahmen der vorliegenden Erfindung von Eigenschaften der "Erfindung" gesprochen wird, so umfasst dies im Zweifel sowohl Eigenschaften des Verfahrens zur Herstellung eines Bohrers, als auch einen mit einem solchen Verfahren hergestellten Bohrer. Wenn im Rahmen der vorliegenden Erfindung von einer im Wesentlichen parallel zur Längsachse des Drahtes verlaufenden Nut oder Roh-Nut gesprochen wird oder von einer Nut oder Roh-Nut ohne Verdrallung gesprochen wird, so umfasst dies jeweils auch Nuten oder Roh-Nuten, die eine Steigung von weniger als 5 Grad aufweisen. In Einzelfällen soll diese Formulierungen auch Nuten umfassen, die eine Steigung von weniger als 10 Grad aufweisen.

In der Fachliteratur und auch umgangssprachlich werden die Begriffe für die Arten der Massivumformung oft missverständlich oder falsch verwendet. So wird in einer Veröffentlichung "Kaltmassivumformung: Präzision in großen Serien" (ISBN: 3-928726-18-8) des Industrieverbandes Massivumformung e.V. vom März 2006 auf Seite 8, Bild 2 eine Massivumformung mit "Reduzieren" bezeichnet. Nach der DIN 8583-6 handelt es sich jedoch dabei eindeutig um den Vorgang "Verjüngen" (DiN 8583-6/2.1.5.1). Im Weiteren werden daher die Begriffe entsprechend der DiN 8583-6 verwendet.

Die vorliegende Erfindung schließt insbesondere die Erkenntnis ein, dass die aus dem Stand der Technik bekannten Verfahren die Nuten mit großem Aufwand in die Drähte oder Halbzeuge für die Bohrer eingebracht haben. Insbesondere wurden die Nuten im Stand der Technik nach Erkenntnissen der vorliegenden Erfindung dadurch eingebracht, dass man unter Verwendung von drei getrennten und unterschiedlichen Maschinen in einem ersten Schritt zuerst den gewünschten Außendurchmesser auf einer Drehmaschine kopiert hat, dann in einem zweiten Schritt mit Hilfe einer weiteren Maschine, einer Walzmaschine, das so entstandene Halbzeug erwärmt und im für die Bohrwendel vorgesehenen Bereich von beiden Seiten flachgewalzt hat, und dann schließlich in einem dritten Schritt mit Hilfe einer Maschine, die die beiden Enden des Bohrerhalbzeugs festhält, unter erneutem Erwärmen durch Drehung der beiden Enden des Bohrerhalbzeugs gegeneinander eine Verdrallung zur Herstellung der Bohrerwendel erzeugt hat. Das Walzen hat auch den großen Nachteil, dass der fertige Bohrer im Bereich zwischen Schaftbereich und Bohrkopf einen geringeren Durchmesser und somit eine Schwachstelle aufweist, an der der Bohrer brechen kann.

Alternativ war es zwar nach Erkenntnissen der vorliegenden Erfindung auch bekannt, in einem ersten Schritt zuerst den gewünschten Außendurchmesser des Bohrerhalbzeugs durch Fließpressen und/oder Reduzieren herzustellen, wobei gleichzeitig die Nuten in das Bohrerhalbzeug mit Hilfe einer sehr teuren und technisch aufwendigen und somit sehr anfälligen Schiebematrize eingebracht und verdrallt wurden. Derartige Schiebematrizen sind jedoch einem sehr großen Verschleiß ausgesetzt und sind besonders durch das gleichzeitige Reduzieren des Durchmessers und das Einformen der verdrallten Nuten derart überlastet, das diese häufig brechen.

Entscheidend ist jedoch nach Erkenntnissen der vorliegenden Erfindung, dass mit Hilfe derartiger Schiebematrizen nur eine begrenzte Umformung möglich ist. Denn alle Bohrerdurchmesser, die kleiner sind als der Einspannschaft des Bohrers, insbesondere jedoch nach Erkenntnissen der vorliegenden Erfindung auf jeden Fall alle Bohrerdurchmesser, die um 30% oder mehr kleiner sind als der Einspannschaft des Bohrers, knicken oder brechen an der Schwachstelle zwischen dem dickeren Schaft und dem dünneren, für den Bohrkopf vorgesehenen Kopfabschnitt, wenn sie in eine solche Schiebematrize eingeschoben werden oder führen zu einem Versagen der Schiebematrize.

Auch Vorschläge wie sie in dem Stand der Technik der DE 199 15 303 A1, der DE 199 15 304 B4 und der DE 196 48 971 A1 gemacht werden, haben sich als zumindest extrem schwierig in der praktischen Ausführung erwiesen. In diesen Vorschlägen wird ein Bohrerrohling mit gegenüber dem Einsteckende unterschiedlichem Durchmesser und mit parallel zur Bohrerlängsachse verlaufenden Bohrmehlnuten durch Fließpressen erzeugt, wobei der Bohrerrohling anschließend verdrallt wird. Die vorliegende Erfindung hat jedoch erkannt, dass auf die vorgeschlagene Weise ein Bohrerrohling nur dann durch Fließpressen erzeugt werden kann, wenn das Einsteckende des Bohrers annähernd den gleichen Durchmesser aufweist wie der Bohrkopf. Andernfalls ist die erforderliche Querschnittsverformung weit außerhalb des technisch machbaren Bereiches. Der Stand der Technik der DE 199 15 305 C2, der DE 198 59 885 A1 bzw. B4, und der EP 0 361 189 A1 liegt jeweils auch weiter ab.

Die Erfindung stellt insbesondere erstmalig die Erkenntnis zur Verfügung, einen mit wendelförmig angeordneten Nuten versehenen Bohrer durch Massivumformen in Form einer Kombination aus Durchdrücken und Verdrallen eines entsprechenden Drahtes oder Bohrerhalbzeuges, bevorzugt auf einer einzigen Maschine herzustellen.

Besonders vorteilhaft ist die vorliegende Erfindung beim Einbringen von drei oder mehr wendelförmig angeordneten Nuten in einen für den Bohrkopf vorgesehenen Bereich, da das Einbringen von drei oder mehr wendelförmig angeordneten Nuten in einen für den Bohrkopf vorgesehenen Bereich nach Erkenntnissen der vorliegenden Erfindung deutlich weniger Umformarbeit erfordert, als bei weniger als drei Nuten, da bei drei oder mehr Nuten der Steigungswinkel und auch der Nutenquerschnitt bei gleichem Durchmesser deutlich kleiner sind als bei weniger als drei Nuten.

Besonders vorteilhaft ist es bei der vorliegenden Erfindung auch, dass auf die teure, anfällige und nur beschränkt einsetzbare Schiebematrize vollständig verzichtet werden kann.

Vor allem kann durch das erfindungsgemäße Vorziehen des Einbringens der Nuten in gerader Form mit einem Fließpress- oder Verjüngungsschritt und einem nachfolgenden Verjüngungsschritt zum einen eine völlig beliebige Anzahl von Nuten eingebracht werden; zum anderen besteht dank der vorliegenden Erfindung auch eine völlige Freiheit bei der Formgebung der Rippen oder Stege zwischen den Nuten oder auch bei den Nuten selbst. So können bspw. Nuten mit ganz unterschiedlichem Querschnitt, auch nebeneinander, in den Draht eingepresst werden. Auch können bspw. Rippen bzw. Stege mit ganz unterschiedlichem Durchmesser, nebeneinander oder durch eine Nut getrennt, in den Draht eingepresst werden.

Die vorliegende Erfindung schafft somit erstmalig eine enorme Freiheit des Herstellers für die Formgebung des Bohrers.

Genauso vorteilhaft kann dank der vorliegenden Erfindung trotz drei oder mehr spiralförmigen Nuten im Bohrkopf auch auf den Schritt des Walzens des Bohrerhalbzeuges zum Einbringen der Nuten vollständig verzichtet werden. Dies ist wiederum von großer Bedeutung für den Zeit- und Kostenaufwand bei der Herstellung, da beim Walzen bspw. für einen Hammerbohrerrohling mit einem Durchmesser von 4,8 mm ein Bohrerhalbzeug mit einem Durchmesser von 4,2 mm benötigt wird. Auch muss beim Walzen das Bohrerhalbzeug - wie oben erwähnt - geglüht werden, damit das Material beim Walzen nicht reißt.

Die vorgenannten Vorteile der vorliegenden Erfindung stellen alle auch einen ganz erheblichen Zeit- und Kostenvorteil bei der Herstellung des erfindungsgemäßen Bohrers dar, denn ein solcher Bohrer ist ein Verschleißartikel, bei dem es ganz entscheidend auf den Herstellungspreis ankommt.

Ein großer Vorteil der Erfindung ist es auch, einen Bohrer und ein Verfahren zur Verfügung zu stellen, bei dem die Bohrernuten ohne Unterbrechung des Faserverlaufes des Stahles etwa durch Fräsen und ohne innere Zerreißungen durch Überforderung des Umformvermögens des Stahls etwa durch Rollwalzen erzeugt werden und somit bestens für eine hohe Dauerwechselfestigkeit geeignet sind, was insbesondere bei hochbeanspruchten Hammerbohrern wichtig ist.

Alle vorgenannten, von der vorliegenden Erfindung erkannten Nachteile werden durch das erfindungsgemäße Verfahren und den mittels des erfindungsgemäßen Verfahrens hergestellten Bohrer der vorliegenden Erfindung vermieden.

Die Erfindung zeichnet sich dadurch aus, dass durch Fließpressen und/oder Verjüngen ein ursprünglicher Durchmesser des Drahtes auf einen gewünschten Durchmesser reduziert wird.

Eine bevorzugte Ausführungsform der Erfindung zeichnet sich dadurch aus, dass die Verdrallvorrichtung als Matrize ausgebildet ist, deren innere Kontur im Wesentlichen der gewünschten Kontur des Bohrerquerschnittes im Wendelbereich und dem gewünschten Winkel der Steigung der Bohrwendel entspricht.

Eine bevorzugte Ausführungsform der Erfindung zeichnet sich dadurch aus, dass zumindest die Schritte Einbringen der im Wesentlichen parallel zur Längsachse des Drahtes verlaufenden Nut und das Verdrallen der mindestens einen Nut, bevorzugt alle Verfahrensschritte, auf einer Maschine erfolgen.

Eine bevorzugte Ausführungsform der Erfindung zeichnet sich dadurch aus, dass die Schritte Einbringen der im Wesentlichen parallel zur Längsachse des Drahtes verlaufenden Nut und das Verdrallen der mindestens einen Nut auf zwei Maschinen erfolgen.

Eine bevorzugte Ausführungsform der Erfindung zeichnet sich dadurch aus, dass in einer Verdrallvorrichtung beim Verdrallen der einen oder mehreren Nuten der Schaftbereich und der Bohrkopf getrennt fixiert und zueinander verdreht werden.

Eine bevorzugte Ausführungsform der Erfindung zeichnet sich dadurch aus, dass zwischen dem Drahtabschnitt mit der oder den Längsnuten und der feststehenden Verdrallmatrize ein leichtes Durchmesserspiel im Bereich von 0,1 bis 1 mm, vorgesehen wird.

Eine bevorzugte Ausführungsform der Erfindung zeichnet sich dadurch aus, dass die Länge des Abschnittes, in dem die Nut eingebracht wird, im Wesentlichen einer Länge einer für den Bohrer gewünschten Bohrerwendel entspricht.

Bevorzugt ist auch, dass die Reduzierung des Drahtdurchmessers in mehreren Stufen durchgeführt wird.

Ebenfalls bevorzugt ist, dass die Roh-Nuten des Bohrers in einem Arbeitsgang eingebracht werden.

Bevorzugt ist, dass die Roh-Nuten und/oder die Bohrwendel des Bohrers ohne Walzen hergestellt werden.

Weiterhin bevorzugt ist, dass die Roh-Nuten und/oder die Bohrwendel des Bohrers mittels Warmumformung unterhalb der Verzunderungstemperatur hergestellt werden.

Auch bevorzugt ist, dass die Roh-Nuten und/oder die Bohrwendel des Bohrers ausschließlich durch Kaltumformung hergestellt werden, insbesondere auch ohne Vorglühen hergestellt werden.

Weiter ist bevorzugt, dass die Bildung der Roh-Nuten des Bohrers gleichzeitig mit einem Reduzieren des Durchmessers vorgenommen wird.

Noch weiter ist bevorzugt, dass der maximale Außendurchmesser des Bohrers zwischen Schaftbereich und Bohrkopf im Wesentlichen, bevorzugt genau, dem maximalen Außendurchmesser des Bohrkopfes entspricht.

Ganz besonders ist es bevorzugt, dass der Schaftbereich und der Bohrkopf des Bohrers, bevorzugt der gesamte Bohrer, einteilig und/oder aus einem Teil hergestellt sind.

Auch ist bevorzugt, dass der Schaftbereich des Bohrers als 1/4-Zoll-Bitantrieb ausgebildet ist und besonders bevorzugt der DIN 3126- E.63 entspricht.

Weiter ist es bevorzugt, dass der Schaftbereich des Bohrers einen Durchmesser von annähernd 10 mm aufweist und bevorzugt als SDSplus®-Einsteckende ausgebildet ist.

Weiter ist es bevorzugt, dass zumindest der Bohrkopf des Bohrers, bevorzugt der Bohrkopf und der Schaftbereich des Bohrers, weiter bevorzugt der ganze Bohrer, aus legiertem Kaltumformstahl hergestellt ist.

Weiter ist es bevorzugt, dass der minimale Außendurchmesser des Bohrers etwa 3 mm und/oder der maximale Außendurchmesser des Bohrers 16 mm beträgt. Weitere bevorzugte Ausführungsformen sind in den Unteransprüchen angegeben.

Im Folgenden wird nun anhand der Zeichnungen eine bevorzugte Ausführungsform der Erfindung beschrieben. Dabei werden gleiche, ähnliche oder funktionsgleiche Teile mit den gleichen Bezugszeichen bezeichnet. Die Zeichnung zeigt:
Fig. 1 zeigt jeweils in perspektivischer Ansicht eine erste und eine zweite Ausführungsform eines erfindungsgemäßen Bohrers;
Fig. 2 zeigt einen vergrößerten Ausschnitt der Figur 1 ;
Fig. 3 zeigt jeweils in perspektivischer Ansicht Bohrköpfe einer dritten und vierten Ausführungsform des erfindungsgemäßen Bohrers;
Fig. 4 zeigt in perspektivischer Ansicht eine Ausführungsform eines als Zwischenprodukt dienenden Bohrerhalbzeugs bei der Herstellung eines Bohrers mit Hilfe einer Ausführungsform des erfindungsgemäßen Verfahrens;
Fig. 5 zeigt einen Querschnitt durch den mit den Nuten versehenen Abschnitt des Bohrerhalbzeugs der Fig. 4, und
Fig. 6 zeigt jeweils in einer Seitenansicht eine fünfte und sechste Ausführungsform des erfindungsgemäßen Bohrers.

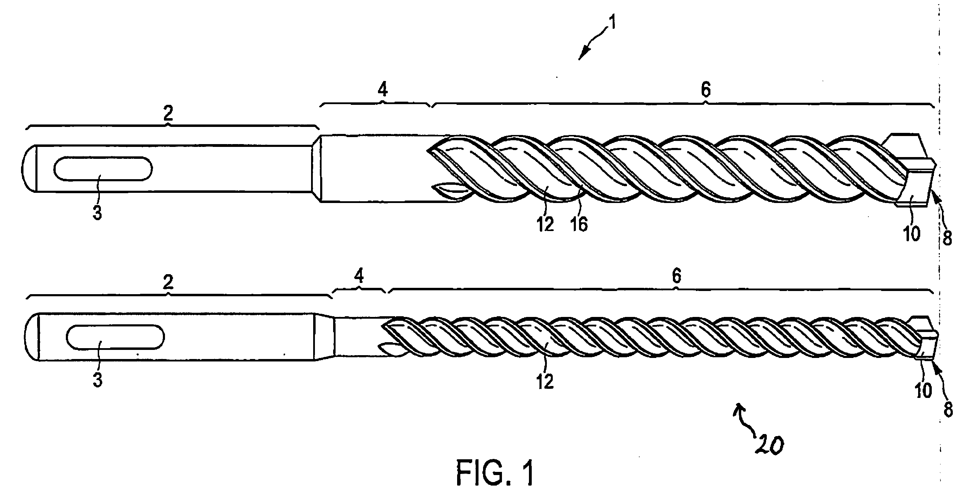

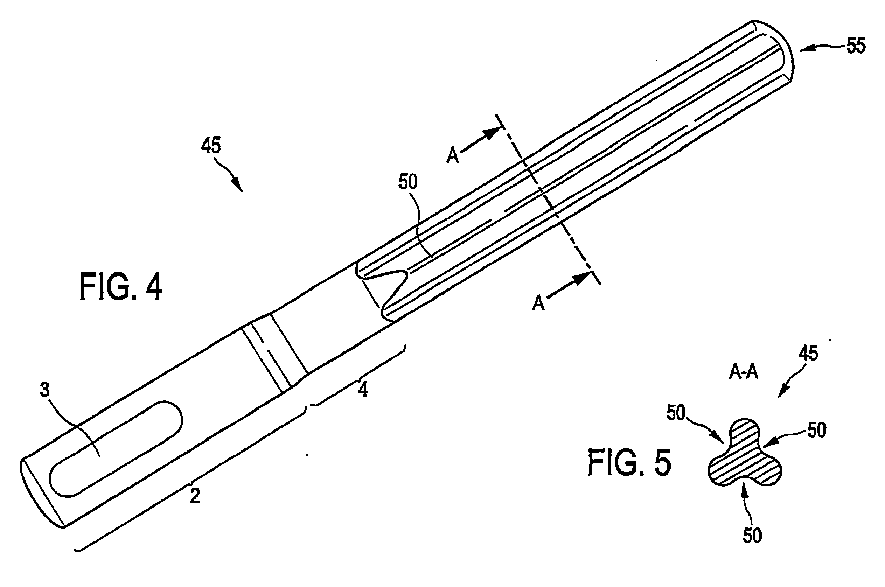

Figur 1 zeigt jeweils in perspektivischer Ansicht eine erste und eine zweite Ausführungsform eines erfindungsgemäßen Bohrers, hergestellt nach einer Ausführungsform des erfindungsgemäßen Verfahrens aus einem Bohrerhalbzeug, wie es bspw. in den Figuren 4 und 5 dargestellt ist.

Die in der Figur 1 oben dargestellte erste Ausführungsform der Erfindung zeigt einen vierspiraligen Bohrer 1, geeignet für Akkuschrauber, Bohrhämmer, Elektroschrauber, Schlagbohrmaschinen oder Drehbohrmaschinen. Bohrer 1 weist einen Schaftbereich 2 zum Einspannen des Bohrers 1 auf. Der Schaftbereich weist parallel zur Längsachse verlaufende Ausnehmungen 3 auf, um den Bohrer 1 einzuspannen. Im Anschluss an den Schaftbereich 2 ist ein Übergangsbereich 4 vorgesehen. Im Anschluss an den Übergangsbereich 4 weist der Bohrer 1 einen Bohrkopf 6 mit dem gleichen Außendurchmesser, wie der Übergangsbereich 4 auf. Der Bohrkopf 6 trägt an seinem Ende eine vier rechtwinklig zueinander angeordnete Schneiden 8 aufweisende Spitze 10 aus einem härteren Schneidenmaterial.

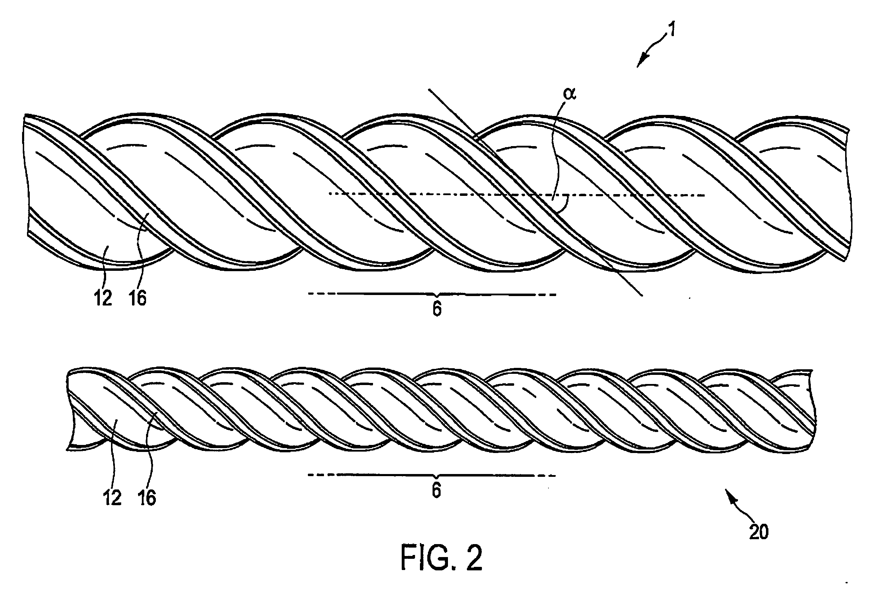

Der Bohrkopf 6 weist eine Bohrwandel mit vier wendelförmig ausgebildete Nuten 12 auf. Die Nuten 12 wurden durch Kaltumformung eines Drahtes hergestellt. Wie aus der vergrößerten Darstellung des Bohrkopfs 6 in der Figur 2 zu erkennen ist, weisen die Nuten 12 eine Steigung *α* auf. Diese beträgt bei der in den Figuren 1 und 2 dargestellten ersten Ausführungsform etwa 45 Grad. Bei anderen, nicht dargestellten Ausführungsformen des Bohrers 1 kann die Steigung α jedoch auch Werte zwischen 20 und 50 Grad annehmen.

Der Schaftbereich 2 des Bohrers 1 kann als 1/4-Zoll-Bitantrieb ausgebildet sein. Der Schaftbereich 2 des Bohrers 1 kann der DiN 3126-E.6.3 entsprechen.

Der Bohrer 1 der ersten Ausführungsform der Erfindung ist durch das erfindungsgemäße Verfahren mittels Kaltumformung hergestellt worden. Dabei sind die Nuten 12 in einem Arbeitsgang ohne Fräsen, ohne Walzen, ohne Vorglühen und ohne Erwärmen hergestellt worden.

Die in der Figur 1 unten dargestellte zweite Ausführungsform der Erfindung zeigt einen Bohrer 20. Bei dem Bohrer 20 sind in Bezug auf die erste Ausführungsform gleiche oder funktionsgleiche Teile mit demselben Bezugszeichen bezeichnet. Der Bohrer 20 unterscheidet sich von dem Bohrer 1 im Wesentlichen nur dadurch, dass der Außendurchmesser des Bohrkopfes 6 und der Übergangsbereich 4 nicht wie bei dem Bohrer 1 größer sind als der Schaft 2, sondern vielmehr deutlich kleiner sind als der Schaftbereich 2.

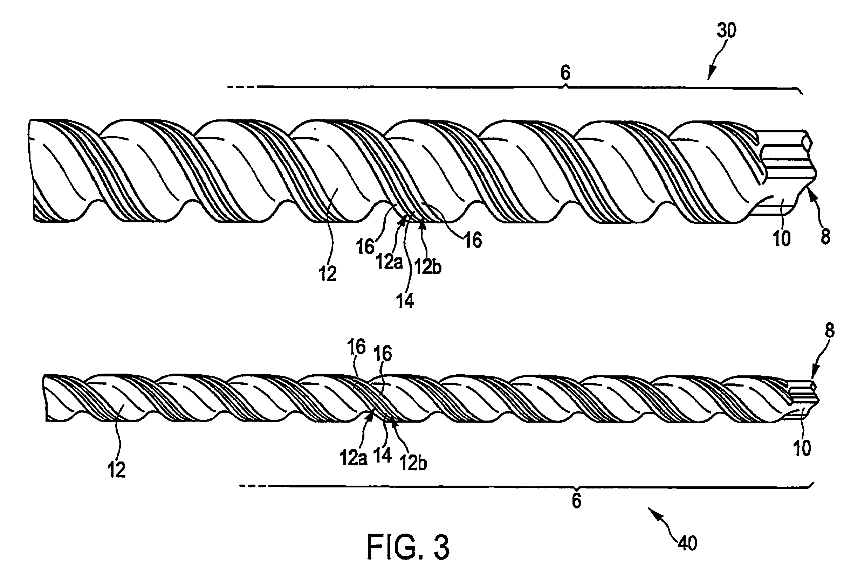

Figur 3 zeigt jeweils in perspektivischer Ansicht Bohrköpfe einer dritten und vierten Ausführungsform des erfindungsgemäßen Bohrers. Die in der Figur 3 oben dargestellte dritte Ausführungsform der Erfindung zeigt einen Bohrer 30. In Bezug auf die erste Ausführungsform gleiche oder funktionsgleiche Teile sind mit denselben Bezugszeichen bezeichnet. Im Gegensatz zu den ersten beiden Ausführungsformen der Figuren 1 und 2 ist bei der dritten Ausführungsform gemäß Bohrer 30 eine große, d.h. breite und tiefe Nut 12 vorgesehen, während zwischen dieser Nut 12 mit großem Querschnitt zwei kleine Nuten 12a und 12b verlaufen, die jeweils sehr flach und sehr schmal sind. Die Nuten 12a und 12b mit kleinem Querschnitt sind durch einen Steg 14 voneinander getrennt, der einen etwas, d.h. etwa um 1 mm, kleineren Außendurchmesser aufweist, als ein die großen Nuten jeweils begrenzender Steg 16.Die in der Figur 3 unten dargestellte vierte Ausführungsform der Erfindung zeigt einen Bohrer 40. Bei dem Bohrer 40 sind in Bezug auf die erste Ausführungsform gleiche oder funktionsgleiche Teile mit demselben Bezugszeichen bezeichnet. Der Bohrer 40 unterscheidet sich von dem Bohrer 30 im Wesentlichen nur dadurch, dass der Außendurchmesser des Bohrkopfes 6 kleiner ist.

Figur 4 zeigt in perspektivischer Ansicht eine Ausführungsform eines als Zwischenprodukt dienenden Bohrerhalbzeugs 45 bei der Herstellung eines Bohrers mit Hilfe einer Ausführungsform des erfindungsgemäßen Verfahrens. Fig. 4 zeigt deutlich eine von drei (siehe den Querschnitt der Fig. 5), in zwei Schritten des erfindungsgemäßen Verfahrens in einen zylinderförmigen Draht durch Fließpressen und Verjüngen eingebrachte Roh-Nuten (d.h. eine Nut ohne Verdrallung) 50.

Im Anschluss an den in der Fig. 4 dargestellten Zustand werden durch Verdrallen die drei Roh-Nuten 50 mittels einer Verdrallmatrize, deren innere Kontur im Wesentlichen der Kontur des Bohrerquerschnittes im Wendelbereich und dem gewünschten Winkel der Steigung der Bohrwendel 12 (siehe Figuren 1-3 und 6) entspricht, erzeugt.

Das Verdrallen kann dabei durch Festhalten des Bohrerhalbzeugs 45 und gleichzeitiges Durchschieben der Verdrallmatrize geschehen; kann jedoch alternativ auch durch Festhalten der Verdrallmatrize und gleichzeitiges Durchschieben des Bohrerhalbzeugs 45 geschehen. Weiter alternativ kann zum Herstellen eines geraden Ausgangs der Nuten 12 an der Spitze des Bohrers auch die Spitze 55 des Bohrerhalbzeugs 45 in eine feststehende gerade Matrize eingesteckt werden und anschließend die Verdrallung durch ein Rotieren der Matrize und Festhalten des Bohrerhalbzeugs 45, oder durch ein Rotieren des Bohrerhalbzeugs 45 und Festhalten der Matrize, in das Bohrerhalbzeug 45 zur Fertigstellung eines Bohrers gemäß den Fig. 1-3 und 6 erzeugt werden.

Figur 5 zeigt entlang der Linie A-A der Fig. 4 einen Querschnitt durch den mit den Roh-Nuten 50 versehenen Abschnitt des Bohrerhalbzeugs 45 der Fig. 4.

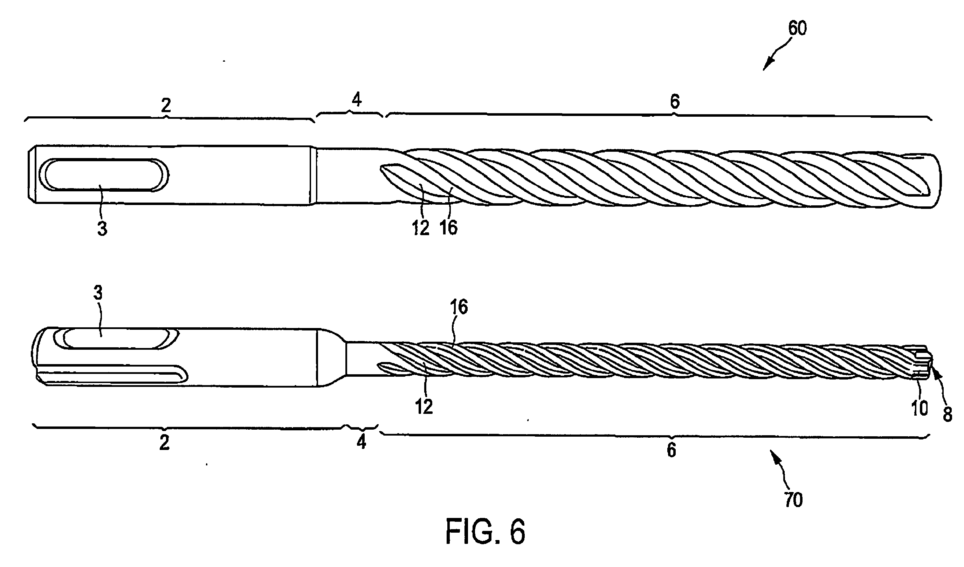

Figur 6 zeigt jeweils in einer Seitenansicht eine fünfte und sechste Ausführungsform des erfindungsgemäßen Bohrers, hergestellt nach einer Ausführungsform des erfindungsgemäßen Verfahrens aus einem Bohrerhalbzeug, wie es beispielsweise in den Figuren 4 und 5 dargestellt ist. Die in der Figur 6 oben dargestellte fünfte Ausführungsform der Erfindung zeigt einen vierspiraligen Bohrer 60, geeignet für Akkuschrauber, Bohrhämmer, Elektroschrauber, Schlagbohrmaschinen oder Drehbohrmaschinen. Bohrer 60 weist einen Schachtbereich 2 zum Einspannen des Bohrers 1 auf. Der Schaftbereich weist parallel zur Linksachse verlaufende Ausnehmungen 30 auf, um den Bohrer 60 einzuspannen. Im Anschluss an den Schaftbereich 2 ist ein Übergangsbereich 4 vorgesehen. Im Anschluss an den Übergangsbereich 4 weist der Bohrer 60 einen Bohrkopf 6 mit dem gleichen Außendurchmesser wie der Übergangsbereich 4 auf.

Der Bohrkopf 6 weist vier wendelförmig ausgebildete Nuten 12 auf. Die Nuten 12 werden durch Kaltumformung eines Drahtes hergestellt. Der Schaftbereich 2 des Bohrers kann als 1/4-Zoll-Bitantrieb ausgebildet und/oder der DIN 3126-E.6.3 entsprechen.

Die in der Figur 6 unten dargestellte sechste Ausführungsform der Erfindung zeigt einen Bohrer 70. Bei dem Bohrer 70 sind in Bezug auf die erste bzw. auf die fünfte Ausführungsform gleiche oder funktionsgleiche Teile mit demselben Bezugszeichen bezeichnet. Der Bohrer 70 unterscheidet sich von dem Bohrer 1 der ersten Ausführungsform im Wesentlichen nur dadurch, dass der Außendurchmesser des Bohrkopfes 6 und der Übergangsbereich 4 nicht wie beim Bohrer 1 größer sind als der Schaft 2, sondern vielmehr deutlich kleiner sind als der Schaftbereich 2 des Bohrers 1. Der Bohrer 70 unterscheidet sich weiterhin von dem Bohrer 60 der fünften Ausführungsform der Erfindung im Wesentlichen nur dadurch, dass der Außendurchmesser des Bohrkopfes 6 bzw. des mit gleichem Außendurchmesser versehenen Übergangsbereiches 4 nicht nur etwas kleiner sind als der Schaftbereich 2, wie dies beim Bohrer 60 der Fall ist, sondern deutlich kleiner sind als der Schaftbereich 2. Darüber hinaus ist der zwischen dem Schaftbereich 2 und dem Übergangsbereich 4 vorgesehene Übergang in Längserstreckung des Bohrers 70 etwas länger und mit gekrümmten Oberflächen ausgebildet, während dieser Übergang bei den Bohrern 1 und 60 der ersten und der fünften Ausführungsformen kurz ausgebildet ist und gerade Oberflächen aufweist.

## Patentansprüche

1. Verfahren zur Herstellung eines Bohrers (1, 20, 30, 40, 60, 70), insbesondere eines Bohrers (1, 20, 30, 40, 60, 70) für Akkuschrauber, Bohrhämmer, Elektroschrauber, Schlagbohrmaschinen, Drehbohrmaschinen und Kombinationen derselben, mit mindestens den vier folgenden Schritten:
a) ein Draht wird zur Verfügung gestellt,
b) durch Fließpressen und/oder Verjüngen, wird ein ursprünglicher Durchmesser des Drahtes über einen Abschnitt des Drahtes auf einen gewünschten Durchmesser reduziert,
c) durch Fließpressen und/oder Verjüngen, in Umformmatrizen wird zumindest in einen Abschnitt des Drahtes mindestens eine im Wesentlichen parallel zur Längsachse des Drahtes verlaufende Roh-Nut (50) eingebracht,
d) die mindestens eine Roh-Nut (50) wird anschließend mittels einer Verdrallvorrichtung zu einer Bohrwendel (12) verdrallt,
wobei mindestens einer der Schritte b) und c) durch Verjüngen vorgenommen wird.

2. Verfahren nach einem der vorstehenden Ansprüche,
wobei der Schritt b) nach dem Schritt c) vorgenommen wird.

3. Verfahren nach einem der vorstehenden Ansprüche,
wobei die Verdrallvorrichtung als Verdrallmatrize ausgebildet ist, deren innere Kontur im Wesentlichen der gewünschten Kontur des Bohrerquerschnittes im Wendelbereich (6) und dem gewünschtem Winkel (α) der Steigung der Bohrwendel (12) entspricht.

4. Verfahren nach einem der vorstehenden Ansprüche,
wobei zumindest die Schritte a) bis c), bevorzugt alle Verfahrensschritte a) bis d), auf einer Maschine erfolgen.

5. Verfahren nach einem der vorstehenden Ansprüche,
wobei die Schritte c) und d) auf zwei Maschinen erfolgen.

6. Verfahren nach einem der vorstehenden Ansprüche,
wobei in einer Verdrallvorrichtung beim Verdrallen der einen oder mehreren Roh-Nuten (50) der Schaftbereich (2) und ein vom Schaftbereich (2) abgewandtes Ende des Bohrkopfes (6) getrennt fixiert und zueinander verdreht werden.

7. Verfahren nach einem der vorstehenden Ansprüche,
wobei zwischen dem Drahtabschnitt mit der oder den Roh-Nuten (50) und der feststehenden Verdrallmatrize ein leichtes Durchmesserspiel im Bereich von 0,1 bis 1mm vorgesehen wird.

8. Verfahren nach einem der vorstehenden Ansprüche,
wobei die Reduzierung des Drahtdurchmessers in mehreren Stufen durchgeführt wird, wobei bevorzugt bis auf eine Stufe alle Stufen durch Verjüngung hergestellt werden.

9. Verfahren nach einem der vorstehenden Ansprüche,
wobei die Roh-Nuten (50) des Bohrers (1, 20, 30, 40, 60, 70) in mehreren Arbeitsgängen eingebracht werden, wobei bevorzugt bis auf eine Stufe alle Stufen durch Verjüngung hergestellt werden.

10. Verfahren nach einem der vorstehenden Ansprüche,
wobei die Roh-Nuten (50) und/oder die Bohrwendel (12) des Bohrers (1, 20, 30, 40, 60, 70) ohne Walzen hergestellt werden.

11. Verfahren nach einem der vorstehenden Ansprüche,
wobei die Roh-Nuten (50) und/oder die Bohrwendel (12) des Bohrers (1, 20, 30, 40, 60, 70) mittels Warmumformung unterhalb der Verzunderungstemperatur hergestellt werden.

12. Verfahren nach einem der vorstehenden Ansprüche,
wobei die Roh-Nuten (50) und/oder die Bohrwendel (12) des Bohrers (1, 20, 30, 40, 60, 70) ausschließlich durch Kaltumformung hergestellt werden, insbesondere auch ohne Vorglühen hergestellt werden.

13. Verfahren nach einem der vorstehenden Ansprüche,
wobei die Bildung der Roh-Nuten (50) des Bohrers (1, 20, 30, 40, 60, 70) gleichzeitig mit einem Reduzieren des Durchmessers vorgenommen wird.

14. Bohrer (1, 20, 30, 40, 60, 70), insbesondere Bohrer (1, 20, 30, 40, 60, 70) für Akkuschrauber, Bohrhämmer, Elektroschrauber, Schlagbohrmaschinen, Drehbohrmaschinen und Kombinationen derselben,
mit einem Schaftbereich (2) zum Einspannen des Bohrers (1, 20, 30, 40, 60, 70), und
mit einem, mindestens eine, bevorzugt mindestens drei, wendelförmig ausgebildete Nuten (12) aufweisenden, Bohrkopf (6),
**dadurch gekennzeichnet, dass**
der Bohrer (1, 20, 30, 40, 60, 70), durch Umformen eines
Drahtes gemäß einem Verfahren nach einem der vorstehenden Ansprüche hergestellt ist.

15. Bohrer (1, 20, 30, 40, 60, 70) nach Anspruch 14,
wobei der maximale Außendurchmesser des Bohrers (1, 20, 30, 40, 60, 70) zwischen Schaftbereich (2) und Bohrkopf (6) im Wesentlichen, bevorzugt genau, dem maximalen Außendurchmesser des Bohrkopfes (6) entspricht, wobei bevorzugt der Schaftbereich (2) und der Bohrkopf (6) des Bohrers (1, 20, 30, 40, 60, 70), bevorzugt der gesamte Bohrer (1, 20, 30, 40, 60, 70), einteilig und/oder aus einem Teil hergestellt sind, wobei bevorzugt der Schaftbereich (2) des Bohrers (1, 20, 30, 40, 60, 70) als 1/4-Zoll-Bitantrieb ausgebildet ist und besonders bevorzugt der DIN 3126- E.63 entspricht, wobei bevorzugt der Schaftbereich (2) des Bohrers (1, 20, 30, 40, 60, 70) einen Durchmesser von annähernd 10 mm aufweist und bevorzugt als SDSplus®-Einsteckende ausgebildet ist, wobei bevorzugt zumindest der Bohrkopf (6) des Bohrers (1, 20, 30, 40, 60, 70), bevorzugt der Bohrkopf (6) und der Schaftbereich (2) des Bohrers (1, 20, 30, 40, 60, 70), weiter bevorzugt der ganze Bohrer (1, 20, 30, 40, 60, 70), aus legiertem Kaltumformstahl hergestellt ist,
wobei bevorzugt der minimale Außendurchmesser des Bohrers (1, 20, 30, 40, 60, 70) etwa 3 mm und/oder der maximale Außendurchmesser des Bohrers (1, 20, 30, 40, 60, 70) 16 mm beträgt.

16. Akkuschrauber, Bohrhammer, Elektroschrauber, Schlagbohrmaschine, Drehbohrmaschine und/oder Kombinationen derselben, mit einem Bohrer (1, 20, 30, 40, 60, 70) nach einem der vorstehenden Ansprüche 14 oder 15.

## Claims

1. Method for producing a drill bit (1, 20, 30, 40, 60, 70), in particular a drill bit (1, 20, 30, 40, 60, 70) for cordless screwdrivers, hammer drills, electric screwdrivers, percussion drilling machines, rotary drilling machines and combinations thereof, having at least the four following steps:
a) a wire is provided,
b) by means of impact extrusion and/or swaging, an original diameter of the wire is reduced to a desired diameter over a portion of the wire,
c) by means of impact extrusion and/or swaging, there is formed, in shaping dies, at least in a portion of the wire at least one basic groove (50) which extends substantially parallel with the longitudinal axis of the wire,
d) the at least one basic groove (50) is subsequently twisted by means of a twisting device to form a helical drill bit member (12),
at least one of the steps b) and c) being carried out by means of swaging.

2. Method according to any one of the preceding claims, the step b) being carried out after step c).

3. Method according to either of the preceding claims, the twisting device being constructed as a twisting die whose inner contour substantially corresponds to the desired contour of the drill bit cross-section in the helical region (6) and the desired angle (α) of the pitch of the helical drill bit member (12).

4. Method according to any one of the preceding claims, at least the steps a) to c), preferably all the method steps a) to d), being carried out on one machine.

5. Method according to any one of the preceding claims, the steps c) and d) being carried out on two machines.

6. Method according to any one of the preceding claims, the shaft region (2) and an end of the drill head (6) facing away from the shaft region (2) being separately fixed and rotated relative to each other in a twisting device when the one or more basic grooves (50) is/are twisted.

7. Method according to any one of the preceding claims, a slight diameter clearance in the range from 0.1 to 1 mm being provided between the wire portion with the basic groove(s) (50) and the fixed twisting die.

8. Method according to any one of the preceding claims, the reduction of the wire diameter being carried out in several steps, all the steps, with the exception of one step, preferably being produced by means of swaging.

9. Method according to any one of the preceding claims, the basic grooves (50) of the drill bit (1, 20, 30, 40, 60, 70) being formed in a plurality of operating steps, all the steps, with the exception of one step, preferably being produced by means of swaging.

10. Method according to any one of the preceding claims, the basic grooves (50) and/or the helical drill bit member (12) of the drill bit (1, 20, 30, 40, 60, 70) being produced without any rolling operation.

11. Method according to any one of the preceding claims, the basic grooves (50) and/or the helical drill bit member (12) of the drill bit (1, 20, 30, 40, 60, 70) being produced by means of hot shaping below the scaling temperature.

12. Method according to any one of the preceding claims, the basic grooves (50) and/or the helical drill bit member (12) of the drill bit (1, 20, 30, 40, 60, 70) being produced exclusively by means of cold shaping, in particular also being produced without any preliminary annealing.

13. Method according to any one of the preceding claims, the formation of the basic grooves (50) of the drill bit (1, 20, 30, 40, 60, 70) being carried out at the same time as the reduction of the diameter.

14. Drill bit (1, 20, 30, 40, 60, 70), in particular drill bit (1, 20, 30, 40, 60, 70) for cordless screwdrivers, hammer drills, electric screwdrivers, percussion drilling machines, rotary drilling machines and combinations thereof,
having a shaft region (2) for clamping the drill bit (1, 20, 30, 40, 60, 70), and
having a drill head (6) which has at least one, preferably at least three, helical groove(s) (12),
**characterised in that** the drill bit (1, 20, 30, 40, 60, 70) is produced by a wire being shaped according to a method in accordance with any one of the preceding claims.

15. Drill bit (1, 20, 30, 40, 60, 70) according to claim 14,
the maximum outer diameter of the drill bit (1, 20, 30, 40, 60, 70) between the shaft region (2) and drill head (6) substantially, preferably precisely, corresponding to the maximum outer diameter of the drill head (6), the shaft region (2) and the drill head (6) of the drill bit (1, 20, 30, 40, 60, 70), preferably the entire drill bit (1, 20, 30, 40, 60, 70), preferably being produced in one piece and/or from one piece, the shaft region (2) of the drill bit (1, 20, 30, 40, 60, 70) preferably being constructed as a ¼ inch bit drive and particularly preferably corresponding to DIN 3126-E.63,
the shaft region (2) of the drill bit (1, 20, 30, 40, 60, 70) preferably having a diameter of approximately 10 mm and preferably being constructed as an SDSplus^{®} shank, at least the drill head (6) of the drill bit (1, 20, 30, 40, 60, 70), preferably the drill head (6) and the shaft region (2) of the drill bit (1, 20, 30, 40, 60, 70), more preferably the entire drill bit (1, 20, 30, 40, 60, 70), preferably being produced from alloyed cold-formed steel,
the minimum outer diameter of the drill bit (1, 20, 30, 40, 60, 70) preferably being approximately 3 mm and/or the maximum outer diameter of the drill bit (1, 20, 30, 40, 60, 70) preferably being 16 mm.

16. Cordless screwdriver, hammer drill, electric screwdriver, percussion drilling machine, rotary drilling machine and/or combinations thereof, having a drill bit (1, 20, 30, 40, 60, 70) according to either of the preceding claims 14 or 15.

## Revendications

1. Procédé de fabrication d'un foreur (1, 20, 30, 40, 60, 70), en particulier d'un foreur (1, 20, 30, 40, 60, 70) destiné à des visseuses électriques sans fil, des marteaux perforateurs, des visseuses, des perceuses électriques portatives à percussion, des perforatrices rotatives et des combinaisons de ces dernières, comportant au moins les quatre étapes suivantes :
a) un fil d'acier est mis à disposition ;
b) un diamètre initial du fil d'acier est réduit à un diamètre souhaité sur un tronçon du fil d'acier par formage par extrusion et/ou par réduction,
c) au moins une rainure brute (50) s'étendant essentiellement de manière parallèle par rapport à l'axe longitudinal du fil d'acier est mise en place au moins dans un tronçon du fil d'acier, dans des matrices de façonnage par formage par extrusion et/ou par réduction,
d) la rainure brute (50) au moins au nombre d'une est directement après toronnée en une hélice de forage (12) au moyen d'un dispositif de toronnage,
dans lequel au moins une des étapes b) et c) est effectuée par réduction.

2. Procédé selon la revendication précédente,
dans lequel l'étape b) est effectuée après l'étape c).

3. Procédé selon l'une quelconque des revendications précédentes,
dans lequel le dispositif de toronnage est réalisé comme une matrice de toronnage, dont le contour intérieur correspond essentiellement au contour souhaité de la section transversale de foreur dans la zone de l'hélice (6) et à l'angle souhaité (α) du pas de l'hélice de forage (12).

4. Procédé selon l'une quelconque des revendications précédentes,
dans lequel au moins les étapes a) à c), de préférence toutes les étapes de procédé a) à d) sont effectuées sur une machine.

5. Procédé selon l'une quelconque des revendications précédentes,
dans lequel les étapes c) et d) sont effectuées sur deux machines.

6. Procédé selon l'une quelconque des revendications précédentes,
dans lequel dans un dispositif de toronnage, lors du toronnage de la ou de plusieurs rainures brutes (50), la zone de tige (2) et une extrémité de la tête de foreur (6), opposée à la zone de tige (2) sont fixées de manière séparée et sont tournées l'une par rapport à l'autre.

7. Procédé selon l'une quelconque des revendications précédentes,
dans lequel un léger jeu de diamètre se situant dans la plage allant de 0,1 à 1 mm est prévu entre le tronçon de fil doté de la ou des rainures brutes (50) et la matrice de toronnage immobile.

8. Procédé selon l'une quelconque des revendications précédentes,
dans lequel la réduction du diamètre de fil d'acier est réalisée en plusieurs étapes, sachant que de préférence toutes les étapes à l'exception d'une étape sont effectuées par réduction.

9. Procédé selon l'une quelconque des revendications précédentes,
dans lequel les rainures brutes (50) du foreur (1, 20, 30, 40, 60, 70) sont mises en place lors de plusieurs opérations, sachant que toutes les étapes à l'exception d'une étape sont effectuées par réduction.

10. Procédé selon l'une quelconque des revendications précédentes,
dans lequel les rainures brutes (50) et/ou les hélices de forage (12) du foreur (1, 20, 30, 40, 60, 70) sont fabriquées sans cylindres.

11. Procédé selon l'une quelconque des revendications précédentes,
dans lequel les rainures brutes (50) et/ou les hélices de forage (12) du foreur (1, 20, 30, 40, 60, 70) sont fabriquées au moyen d'un façonnage à chaud à une température inférieure à la température d'oxydation.

12. Procédé selon l'une quelconque des revendications précédentes,
dans lequel les rainures brutes (50) et/ou les hélices de forage (12) du foreur (1, 20, 30, 40, 60, 70) sont fabriquées uniquement par façonnage à froid, en particulier également sans recuit préliminaire.

13. Procédé selon l'une quelconque des revendications précédentes,
dans lequel la formation des rainures brutes (50) du foreur (1, 20, 30, 40, 60, 70) est effectuée de manière simultanée avec une réduction du diamètre.

14. Foreur (1, 20, 30, 40, 60, 70), en particulier foreur (1, 20, 30, 40, 60, 70) destiné à des visseuses électriques sans fil, des marteaux perforateurs, des visseuses, des perceuses électriques portatives à percussion, des perforatrices rotatives et des combinaisons de ces dernières,
comportant une zone de tige (2) servant à serrer le foreur (1, 20, 30, 40, 60, 70) et
comportant une tête de foreur (6) présentant au moins une, de préférence trois rainures (12) réalisées de manière à présenter une forme hélicoïdale,
**caractérisé en ce que** le foreur (1, 20, 30, 40, 60, 70) est fabriqué par façonnage d'un fil d'acier selon un procédé selon l'une quelconque des revendications précédentes.

15. Foreur (1, 20, 30, 40, 60, 70) selon la revendication 14,
dans lequel le diamètre extérieur maximal du foreur (1, 20, 30, 40, 60, 70) entre la zone de tige (2) et la tête de foreur (6) correspond essentiellement, de préférence avec précision, au diamètre extérieur maximal de la tête de foreur (6), sachant que de préférence la zone de tige (2) et la tête de foreur (6) du foreur (1, 20, 30, 40, 60, 70), de préférence tout le foreur (1, 20, 30, 40, 60, 70) sont fabriqués en une seule partie et/ou à partir d'une partie, sachant que de préférence la zone de tige (2) du foreur (1, 20, 30, 40, 60, 70) est réalisée comme un foret à six pans 1/4'' et correspond en particulier de préférence à la norme DIN 3126-E.63, sachant que de préférence la zone de tige (2) du foreur (1, 20, 30, 40, 60, 70) présente un diamètre d'approximativement 10 mm et est réalisée de préférence comme une extrémité d'insertion SDSplus^{®}, sachant que de préférence au moins la tête de foreur (6) du foreur (1, 20, 30, 40, 60, 70), de préférence la tête de foreur (6) et la zone de tige (2) du foreur (1, 20, 30, 40, 60, 70), de manière plus préférée tout le foreur (1, 20, 30, 40, 60, 70) sont fabriqués à partir d'un acier à façonnage à froid allié,
sachant que de préférence le diamètre extérieur minimal du foreur (1, 20, 30, 40, 60, 70) est d'environ 3 mm et/ou que le diamètre extérieur maximal du foreur (1, 20, 30, 40, 60, 70) est de 16 mm.

16. Visseuses électriques sans fil, marteaux perforateurs, visseuses, perceuses électriques portatives à percussion, perforatrices rotatives et combinaisons de ces dernières, comportant un foreur (1, 20, 30, 40, 60, 70) selon l'une quelconque des revendications 14 ou 15.
